# EUROPÄISCHE PATENTANMELDUNG

(11) **EP 1 775 379 A1**
(43) Veröffentlichungstag der Anmeldung: **18.04.2007**
(21) Anmeldenummer: 06021321.2
(22) Anmeldetag: 11.10.2006
(51) Int. Cl.: D21H 11/12, A23P 1/10, A23G 3/42, A22C 13/00, A23L 1/052, A23L 1/212

(54) **Werkstoff zur Herstellung von flächigen oder körperlichen Erzeugnissen aus Kürbisgewächsen**

(30) Priorität: 11.10.2005 DE 102005048741
(71) Anmelder: Winkler, Mirjam, 8442 Kitzeck (AT)
(72) Erfinder: Winkler, Mirjam, 8442 Kitzeck (AT)
(74) Vertreter: Pätzold, Herbert

(57) **Zusammenfassung**

Die Erfindung betrifft die Herstellung und Verwendung von zweidimensionalen flachen Erzeugnissen und dreidlmensionalen körperlichen Erzeugnissen, insbesondere eßbare Papiere aus oder überwiegend aus Kürbispflanzen und/oder Kürbisranken..

## Beschreibung

Die Erfindung betrifft einen Werkstoff zur Herstellung von zweidimensionalen flächigen und dreidimensionalen körperlichen Erzeugnissen bestehend aus oder enthaltend wenigstens ein rein biologisches Erzeugnis.

Die moderne Industriegesellschaft vor allem in den menschlichen Ballungsräumen benötigt im zunehmenden Maße riesige Mengen an Papier, Kartonagen und Pappen, die hauptsächlich aus Holz hergestellt werden, wodurch bedenkenlos in ökologischer Blindheit Wälder als wichtige Kohlendioxidverbraucher und Sauerstoffspender vernichtet werden, obwohl das globale Problem den zunehmenden Erwärmung der Erde durch den hohen Kohlendioxidanfall seit langem bekannt ist.

Die modeme Industriegesellschaft läuft außerdem immer mehr im Gefahr, den einseitigen Nahrungsangeboten von wenigen profitorientierten und global agierenden großen Nahrungsmittelkonzernen zu erliegen, die aufgrund ihrer beträchtlichen Finanzkraft einen erheblichen Werbeaufwand für ihre Produkte betreiben können, die aber häufig in einem deutlichen Widerspruch zu einer gesunden Ernährung aus rein biologischen Erzeugnissen stehen, wie an der zunehmenden Übergerichtigkeit der Verbraucher solcher Produkte, insbesondere auch bei Kindern erkennbar ist.

Es ist Aufgabe der Erfindung mit rein biologischen Erzeugnissen - wenn auch in einem vergleichsweise bescheidenem Rahmen - zugleich beiden vorstehenden Problemen entgegen zu wirken, die aus einem weithin unbeachteten jährlich nachwachsendem Rohstoff (z.B. aus der Steiermark in Ostreich) in Verbindung mit tradieren Handwerk hergestellt werden können, wobei zugleich in ländlichen Gegenden neue Arbeitsplätze und Anreize für den Tourismus geschaffen werden können.

Die Aufgabe wird erfindungsgemaß dadurch gelöst, dass der eingangs bezeichnete zwei- oder dreidimensionale Werkstoff zur Herstellung einer Vielzahl von rein biologischen Erzeugnissen aus wenigstens einem Aufbereitungsprodukt aus Kukurbitazeen (Kürbisgewächsen) und/oder ähnlich rankenden, kürbisartigen Gemüsen (Zucchini, Melonen) besteht oder dieses überwiegend enthält, ausgewählt aus den Aufbereitungsprodukten bestehend aus
Kürbis-Zellstoff (Zellulose)
Kürbis-Füllstoff
Kürbis-Bindemittel (Leimung) und
Kürbissaft

Ausgangsstoff der Aufbereitungsprodukte können frische, vor Fäulnis bewahrte konservierte, durch Pressung teilweise oder weitgehend entsaftete und/ oder getrocknete Kürbisgewächse, insbesondere Kürbisfleisch und/oder die Ranken der Kürbisgewächse sein. Dabei kann es sich um unreife und/oder reife Kürbisgewächse mit oder ohne ihren Kernen, insbesondere Ölkürbisgewächse, z.B. aus der Steiermark, handeln, wobei die Ranken besonders Zellstoffreich sind.

Das erfindungsgemäße flächige Erzeugnis kann vorteilhafterweise aus Papier, Karton oder Pappe bestehen, und das erfindungsgemäße dreidimensionale Erzeugnis kann vorteilhafterweise aus Pappmaché (Papiermaché) bestehen, es kann sich aber auch um getrocknete Erzeugnisse in der Gestalt von flachen oder runden gepreßten Tabletten oder um z.B. kräckerartig oder dergleichen gepreßte Erzeugnisse handlen.

Der durch Pressung von frischen Kürbisfleisch erhaltene Kürbissaft kann erfindungsgemäß Ausgangsstoff z.B. zur Herstellung von gelatineartigen Folien oder auch Zuschlagstoff bei der Herstellung von Erzeugnissen zur Erhöhung von Leimeigenschaften sein.

Ein wesentlicher Gedanke der Erfindung ist, dass die verschiedenen Erzeugnisse auf der Basis von Kürbispflanzen auch eßbar bzw. trinkbar ausgebildet sein können. Dabei können den eßbaren bzw. trinkbaren Produkten z.B. Salz und/oder Zucker und/oder ausgewählte Gewürze oder Gewürzmischungen zugesetzt sein. Gegenstände aus Papiermache können z.B. als eßbarer Weihnachtsschmuck oder Osterschmuck (z.B. Weihnachtsmänner, Osterhasen) ausgebildet sein, die mit Lebensmittelfarben angemählt oder z.B. mit Schokolade oder Zuckerguß überzogen sein können.

Der durch Pressung von Kürbisfleisch erhaltene Kürbissaft kann Ausgangsstoff für Getränke zur Pflege der Gesundheit sein, dem z.B. Vitamine und/oder Obst und/oder Gemüsesaft zugesetzt sein können.

In geleeartig verdickter Form kann der Kürbissaft auch in Verbindung mit zusätzlichen natürlichen Säften als eßbarer Aufstrich ausgebildet sein.

Weiterhin kann der aus Pressung von Kürbisfleisch erhaltene eingedickte Kürbissaft zu wasserlöslichen Tablettenkapseln gehärtet ausgebildet sein, die als Träger von einzunehmenden Stoffen zur Gesundheitsvorsorge und Gesundheitspflege dienen können.

Der eingedickte Kürbissaft mit gelatineartiger Struktur kann zu eßbaren Produkten geformt sein. Dabei können den verschiedenen Erzeugnissen aus Kürbissaft gesundheitserhaltene oder gesundheitsfördernde Stoffe beigefügt sein.

Ein erfindungsgemäßen Verfahren zur Herstellung von papier- und kartontechnischen Kürbis-Aufbereitungsprodukten, auch in essbarer Form, ist wie folgt gekennzeichnet
durch papiertechnische thermomechanische oder chemo-thermomechanische Aufbereitung von Kürbisfleisch und/oder Kürbisranken wird ein faserhaltiger Rohstoff (Halbstoff) gewonnen, der von pflanzlichen Resten im wesentlichen gereinigt ist.

Für die thermomechanische oder chemo-thermomechanische Aufbereitung zur Herstellung eines erfindungsgemäßen Werkstoffes können als Mahlvorrichtung in der Papiertechnik bekannte soganannte Höllander oder Refiner in tradierten Techniken verwendet werden.

Das aus Kürbispflanzen in vorbestimmten tradierten techniken gewonnene Papier kann z.B. als Schreibpapier bzw. Schreibmaschinenpapier oder als Packmaterial in verschiedenen Formen sowie als Hygienepapier und zum Bastel und Werken verwendet werden.

Die für Papier notwendigen Ausgangsstoffe sind dabei, wie gesagt, Zellulose (Zellstoff). Leimung und Füllstoff so wie gegebenenfalls Kürbissaft.

Die Zellulose ist bekanntlich ein Polysaccharid der Kohlehydrate mit der chemischen Formel C₆H₁₀O_{5.} Sie stellt die häufigste organische Verbindung der Welt dar, aus der fast alle Zellwände von Pflanzen und Hölzern bestehen. Die Zellulose von Kürbisranken besitzt wegen ihrer vergleichsweise extremen Reißfestigkeit z.B. hervorragende Eigenschaften zur Herstellung von Papier und Karton und ist der Zellulose aus Holz für ausgewählte Papiersorten weit überlegen.

Thermomechanischer Rohstoff aus Kürbispflanzen zur Papierherstellung kann aus Hackschnitzeln aus Kürbisfleisch und Kürbisranken oder nur aus Kürbisfleisch oder nur aus Ranken z.B. in einem tradierten Holländer- oder Refinerverfahren z.B. bei 130° C hergestellt werden. Die Lignin-Verbindungen zwischen den Kürbisfasern lockern sich dabei. Anschließend werden die Kürbisteile z.B. in Holländer oder Refinern (Druckmahlmaschinen) mit geriffelten Mahlscheiben unter Zusatz vom Wasser gemahlen.

Allein thermomechanisch aufbereitete Kürbisfaserstoffe haben eine relativ grobe Kürbisfaserstruktur wobei die Fasern zerrieben und abgeschliffen oder gequetscht sind.

Sofern für bestimmte Papiersorten die elementare Kürbisfasern notwendig sind, ist ein chemischer Aufschluß der groben Kürbisfaserstruktur mit anschließender Reinigung von den chemischen Bestandteilen nötig. Hierzu können in bekannter Weise Kochchemikalien auf Natron-, Sulfit- oder Sulfatbasis eingesetzt werden. Beispieleweise kann die grobe Kürbisfaserstruktur zur Aufweichung in Notanlage gekocht und die Natronlange durch Sulfidablange entfernt werden.

Sulfatzellstoff ist im Vergleich zu Sulfitzellstoff langfasriger und reißfester. Sulfatzellstoff kann für Schreib- und Druckpapiere und Sulfitzellstoff kann überwiegend bei der Herstellung weicher Hygienepapiere verwendet werden.

Die thermodynamisch oder chemo-thermodynamisch aus Kürbispflanzen aufbereiteten Kürbisfaserstoffe können als Halbfertigprodukt (Halbstoff) durch Mahlung und Mischung zum Ausgangsstoff (Ganzstoff) für die Papier- und Kartonherstellung verarbeitet werden.

Die Kürbisfaserstoffe (Halbstoff) werden in Holländer oder Refinern weider zerfasert. Die Fasern werden dabei je nach Einstellung der Mahlvorrichtungen auf vorbestimmte Läugen zerschnitten und/oder zerquetscht (schmierig gemahlen). Die Enden der gequetschten Fasern sind dabei fibrilliert (ausgefranst) was die Verbindung der Fasern bei der Papier- und Kartonblattbildung verbessert.

Weiche, voluminöse, saugfähige und samtige Papiersorten bestehen weitgehend aus bei der Mahlung zerschnittenen Kürbisfasern.

Schmierug gemahlene Kürbisfasern führen zu vergleichsweise festeren harten Papieren mit relativ geringer Saugkähigkeit und wolkiger oder gleichmäßiger Transparenz z.B. transparentes Zeichenpapier aber auch Urkundenpapier und bedruckbaren Papier.

Außerdem können die Fasern bei der Mahlung lang oder kurz gehalten werden. Es ergeben sich daraus verschiedene Möglichkeiten der Mahlung. Faserlänge und Mahlart bestimmen Faser- und Papierqualität. Übliche Kombinationen sind relativ lange Fasern und schmierige/kurze gemahlene Fasern. Lange Fasern verfilzen stärker als kurze Fasern.

Neben den fertig aufbereiteten Faserstoffen können dem Papierrohrstoff z.B. bis zu 30% Füllstoffe aus Kürbis einzugefügt werden. Durch den Kürbisfüllstoff werden bei der Papierblattbildung Zwischenräume zwischen den Fasern ausgefüllt, wodurch das Papier weicher und geschmeidiger wird und eine glatte Oberfläche erhält.

Durch zugesetzte Leimung aus Kürbis wird das Papier weniger saugfähig und weniger hygroskopisch. Stark geleimte Papiere zeichnen sich durch hohe Reißfestigkeit aus. Zu den Leimen gehören insbesondere harzartigen Stoffe in den Kürbnisschalen sowie der aus Kürbisfleisch ausgepreßte Saft.

Das zu 100% aus Kürbisfasern, Kürbisfüllstoff und Kürbisleimung per Hand oder auf Siebmaschinen gewonnene Kürbispapier hat den Vorteil, dass es als vollbiologisches Produkt eßbar ist, so dass Lebensmittel in Kürbispapier verpackt zusammen mit dem Papier gegessen werden können. So gibt es Wurststoffen, deren Häute aus Papier bestehen, so dass sich hierfür eßbaren Kürbispapier besonders anbietet.

Die Kürbisfasern mit oder ohne Füllstoff und mit oder ohne Leimung lassen sich z.B. zu Papiermaché und zu runden oder flachen Tabletten oder auch zu kräckerartigen Produkten als Nahrungsergänzungsmittel verpressen, denen wahlweise ausgewählte Gewürze zugemischt sein können, um hier nur wenige Verwendungsarten zu nennen, auf die die Erfindung nicht beschränkt ist.

Die Erfindung ist damit nicht auf die angesprochenen verschiedenen Erzeugnisse aus Kürbispflanzen oder vergleichbar ähnliche Pflanzen beschränkt.

Für die hier betreffenden Fachleute aus der Nahrungsmittelindustrie und der Papierindustrie werden durch die aufgezeigten Beispiele aber alternative Herstellungs- und Verwendungsmöglichkeiten ohne weiteres eröffnet, die aus dem Schutzbereich (Aquivalenzbereich) der Erfindung nicht herausführen.

## Patentansprüche

1. Werkstoff zur Herstellung von zweidimensional flächigen und dreidimensional körperlichen rein biologischen Erzeugnissen bestehend aus oder überwiegend enthaltend wenigstens ein Aufbereitungsprodukt aus Kukurbitazeen (Kürbisgewächesen) oder ähnlichen rankenden kürbisartigen Gewächsen, wobei das Kürbis-Aufbereitungsprodukt ausgewählt ist aus den Kürbis-Aufbereitungsprodukten bestehend aus
Kürbis-Zellstoff (Zellulose),
Kürbis-Füllstoff,
Kürbis-Bindemittel (Leimung) und
Kürbissaft

2. Werkstoff nach Anspruch 1, **dadurch gekennzeichnet, dass** frisches, konserviertes, durch Pressung wenigstens teilweise entsaftetes und/oder getrocknetes Kürbisfleisch und/oder Kürbissaft und/oder Kürbisranken verwendet sind.

3. Werkstoff nach Anspruch 2, **dadurch gekennzeichnet, dass** Ölkürbisse und ihre Ranken verwendet ist.

4. Werkstoff nach einem der Ansprüche 1 bis 3 **dadurch gekennzeichnet, dass** ein oder mehrere Aufbereitungsprodukte zur Herstellung von Kürbispapier, Kürbiskarton oder Kürbispappe geeignet ausgebildet sind.

5. Werkstoff nach Anspruch 1 bis 5, **dadurch gekennzeichnet, dass** ein oder mehrere Aufbereitungsprodukte zur Herstellung von Kürbis-Pappmaché geeignet ausgebildet sind.

6. Werkstoff nach Anspruch 1 bis 5, **dadurch gekennzeichnet, dass** ein oder mehrere Aufbereitungsprodukte zur Herstellung von Tabletten oder kräckerartigen Produkte geeignet ausgebildet sind.

7. Werkstoff nach Anspruch 2, **dadurch gekennzeichnet, dass** der Kürbissaft aus gepreßtem Kürbisfleisch hergestellt ist.

8. Werkstoff nach Anspruch 7, **dadurch gekennzeichnet, dass** der Kürbissaft zur Herstellung von gelatineartigen Folien geeignet ausgebildet ist.

9. Werkstoff nach einem der vorstehenden Ansprüche 4 bis 8, **dadurch gekennzeichnet, dass** der Kürbissaft zur Herstellung von essbaren oder trinkbaren Produkten ausgebildet ist.

10. Werkstoff nach Anspruch 9, **dadurch gekennzeichnet, dass** dem Werkstoff Salz und/oder Zucker und/oder ausgewählte Gewürze oder Gewürzmischungen zugesetzt sind.

11. Werkstoff nach Anspruch 7, **dadurch gekennzeichnet, dass** der Kürbissaft zur Herstellung von Kürbisgetränken zur Pflege der Gesundheit geeignet ausgebildet ist.

12. Werkstoff nach Anspruch 7, **dadurch gekennzeichnet, dass** der Kürbissaft zur Herstellung von geleeartigen Nahrungs- und Nahrungsergänzungsmitteln geeignet ausgebildet ist.

13. Werkstoff nach Anspruch 7, **dadurch gekennzeichnet, dass** ein oder mehrere Aufbereitungsprodukte zur Herstellung von wasserlöslichen Tabletten oder Tablettenkapseln geeignet ausgebildet sind.

14. Werkstoff nach Anspruch 7, **dadurch gekennzeichnet, dass** ein oder mehrere Aufbereitungsprodukte zur Herstellung von eßbaren Produkten mit gelatineartiger Struktur geeignet ausgebildet sind.

15. Werkstoff nach Anspruch 14, **dadurch gekennzeichnet, dass** ein oder mehrere Aufbereitungsprodukte zur Herstellung von eßbaren Gegenständen (Figuren) aus Pappmaché geeignet ausgebildet sind.

16. Werkstoff nach einem oder mehreren der Ansprüche, **dadurch gekennzeichnet, dass** die eßbaren oder zum Einnehmen vorgesehenen Produkte gesundheitserhaltende oder gesundheitsfördemde Stoffe enthalten.

17. Verfahren zur Herstellung von papier- und kartontechnischen Kürbis-Aufbereitungsprodukten auch in eßbarer Form,
**dadurch gekennzeichnet,**
**dass** durch papiertechnische thermomechanische oder chemothermomechanische Aufbereitung von Kürbisfleisch und/oder
Kürbisranken ein faserhaltiger Kürbis-Rohstoff (Kürbis-Halbstoff) gewonnen wird, der von pflanzlichen Kürbisresten gereinigt ist;
**dass** aus dem papiertechnischen Kürbis-Halbstoff durch einen relativ kurzzeitigen papiertechnischen Mahlvorgang KürbisZellstoff (Zellulose) mit gewählter Kürbisfaserlänge in zerquetschter und fibrillierter Form herstellt wird, dass aus dem papiertechnischen Kürbis-Halbstoff durch einen vergleichsweise längerzeitigen papiertechnischen Mahlvorgang Kürbisfüllstoff mit gewählter feinkörniger Faserstruktur herstellt wird, die hauptsächlich aus Kürbiszeliwänden und aus Bestandteilen der Kürbisschale besteht und
**dass** aus dem papiertechnischen Kürbis-Halbstoff durch einen vergleichsweise weiter verlängerten papiertechnischen Mahlvorgang Kürbis-Bindemittel (Kürbis-Leimung) hergestellt wird, der aus schmierig gemahlenen Faserbruchstücken und harzigen Bestandteilen aus dem Kürbisfleisch besteht.

18. Verfahren nach Anspruch 17 zur Herstellung von Papier oder Karton, aus Kürbis-Zellstoff unter Zugabe von Kürbis-Füllstoff und Kürbis-Leimung in Abhängigkeit von der herzustellenden Papier- oder Kartonart unter Zugabe der notwendigen Wassermenge der papiertechnische Kürbis-Ganzstoff gemischt wird, bis zum Erhalt eines schöpffähigen Papier- oder Kartonbogens oder zur Aufgabe auf eine Papiermaschine zur Fertigung einer Papier- oder Kartonbahn.

19. Verfahren nach Anspruch 18, **dadurch gekennzeichnet, dass** zusätzlich oder statt der Zumischung von Kürbisleimung zum Erhalt des fertigen Kürbis-Ganzstoffes handgeschöpftes oder durch die Papiermaschine erhaltenes Papier oder Karton zur Fertigung von Papier- und Karton mit hoher Nassfestigkeit, erhöhter Oberflächenfestigkeit und/oder erhöhtem Glanz und Glätte für Druckpapiere mit Kürbis-Leimung bestrichen wird.

20. Verfahren nach Anspruch 7 in Verbindung mit Anspruch 18 oder 19, **dadurch gekennzeichnet, dass** der erhaltenen Kürbis-Leimung zur Einstellung erhöhter Leimeigenschaften Kürbissaft zugesetzt wird.

21. Verfahren nach Anspruch 6 oder 13 zur Herstellung von Tabletten, TablettenKapseln oder kräckerartigen Produkten Kürbis-Zellstoff in Verbindung mit oder ohne Kürbis-Füllstoff und/oder Kürbis-Leimung bis auf eine Restfeuchte entwässert, in die gewünschte Form bei gewählter Temperatur gepresst und getrocknet wird.
